# EUROPÄISCHE PATENTSCHRIFT

(11) **EP 3 163 271 B1**
(45) Veröffentlichungstag und Bekanntmachung des Hinweises auf die Patenterteilung: **21.08.2019**
(21) Anmeldenummer: 16194765.0
(22) Anmeldetag: 20.10.2016
(51) Int. Cl.: G01K 7/16

(54) **BELEUCHTUNGSVORRICHTUNG FÜR EIN KRAFTFAHRZEUG UND VERFAHREN ZUR HERSTELLUNG EINER BELEUCHTUNGSVORRICHTUNG**
LIGHTING DEVICE FOR A MOTOR VEHICLE AND METHOD FOR MANUFACTURING OF A LIGHTING DEVICE
DISPOSITIF D'ÉCLAIRAGE POUR VÉHICULE AUTOMOBILE ET MÉTHODE DE FABRICATION D'UN DISPOSITIF D'ÉCLAIRAGE

(30) Priorität: 29.10.2015 DE 102015013947
(43) Veröffentlichungstag der Anmeldung: 03.05.2017
(73) Patentinhaber: AUDI AG, 85045 Ingolstadt (DE)
(72) Erfinder: Thomas, Werner, 85055 Ingolstadt (DE); Rabenau, Philipp, 85134 Stammham (DE)

(56) Entgegenhaltungen:
- EP-A1- 2 450 237
- EP-A1- 2 506 269
- EP-A2- 2 168 814
- DE-U1-202005 014 791
- JP-A- 2012 185 095
- JP-A- 2015 034 760

## Beschreibung

Die Erfindung betrifft eine Beleuchtungsvorrichtung für ein Kraftfahrzeug mit einer Flächenlichtquelle gemäß dem Oberbegriff des Patentanspruchs 1. Weiterhin betrifft die Erfindung ein Verfahren zum Herstellen einer Beleuchtungsvorrichtung für ein Kraftfahrzeug mit einer Flächenlichtquelle.

Die EP 2 450 237 A1 beschreibt eine Schaltungsanordnung zum Betreiben von Leuchtdioden. Mittels der Schaltungsanordnung können Leuchtdioden-Arrays mit mehreren Reihen von Leuchtdioden angesteuert werden, wobei ein Temperatursensor vorgesehen ist, welcher mit einer der Leuchtdioden thermisch gekoppelt ist. Dadurch kann ein Ansteigen der Betriebstemperatur der Leuchtdioden detektiert werden. Die Schaltungsanordnung weist ein Dünnfilmsubstrat auf, auf welcher die Leuchtdioden und der Temperatursensor angeordnet sind.

Aus der DE 100 66 067 A1 ist eine Lampe für ein Fahrzeug bekannt, die in eine Oberfläche eines Fahrzeugteils herausnehmbar integrierbar ist. Diese Lampe kann ferngesteuert werden. Zu diesem Zweck ist an der Lampe ein Sensor zum Empfangen von Signalen angeordnet, welcher als Dünnfilm aufgebracht werden kann.

Aus der DE 199 52 314 C2 ist ein Sensor, insbesondere ein Sensor mit planarer wirksamer Sensoroberfläche, zur direkten Berührung mit einem Messmedium bekannt. Der Sensor kann dabei als Temperaturmesswiderstand nach Art eines Dünnfilmsensors ausgebildet sein.

Aus der DE 10 2012 112 314 A1 ist ein thermisches Durchflussmessgerät zur Bestimmung und/oder Überwachung eines Massendurchflusses eines Messmediums durch ein Messrohr bekannt. Zu diesem Zweck umfasst das Durchflussmessgerät einen Sensor mit zumindest einem beheizbaren Sensorelement. Der Sensor kann als Dünnschichtsensor ausgebildet sein.

Es ist bekannt, eine Temperatur einer Beleuchtung eines Kraftfahrzeugs zu überwachen, um eine Beschädigung durch eine Überhitzung zu vermeiden. Aufgabe der vorliegenden Erfindung ist es, eine solche temperaturüberwachte Beleuchtungsvorrichtung zu verbessern. Weiterhin ist es Aufgabe der Erfindung, ein besonders kostengünstiges Verfahren zum Herstellen einer solchen Beleuchtungsvorrichtung zu schaffen.

Diese Aufgaben werden erfindungsgemäß durch eine Beleuchtungsvorrichtung mit den Merkmalen des Patentanspruchs 1 und ein Verfahren mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Beleuchtungsvorrichtung als vorteilhafte Ausgestaltungen des Verfahrens zum Herstellen der Beleuchtungsvorrichtung und umgekehrt anzusehen sind.

Ein erster Aspekt der Erfindung betrifft eine Beleuchtungsvorrichtung für ein Kraftfahrzeug mit einer Flächenlichtquelle. Eine solche Beleuchtungsvorrichtung ist beispielsweise dazu geeignet, einen Innenraum des Kraftfahrzeugs zu beleuchten. Mittels einer Flächenlichtquelle kann dabei eine Fläche besonders gleichmäßig ausgeleuchtet werden und/oder die Flächenlichtquelle kann als besonderes Designelement eingesetzt werden. Durch den Betrieb der Beleuchtungsvorrichtung kann sich die Flächenlichtquelle erwärmen, wobei diese bei besonders hohen Temperaturen beschädigt werden kann. Eine zusätzliche thermische Belastung der Flächenlichtquelle kann durch deren Anordnung in oder an dem Kraftfahrzeug und durch jeweilige Umweltbedingungen bewirkt werden. Beispielsweise kann eine Flächenlichtquelle, welche an einem Dachhimmel des Kraftfahrzeugs angeordnet ist, durch auf das Kraftfahrzeug einwirkende Sonnenstrahlung zusätzlich erhitzt werden.

Gemäß der Erfindung ist vorgesehen, dass die Beleuchtungsvorrichtung eine Temperatursensoreinrichtung mit einer Vielzahl von Dünnfilmsensoren zum Erfassen einer Temperaturverteilung der Flächenlichtquelle und eine Steuereinrichtung umfasst, mittels welcher eine mittels der Flächenlichtquelle erzeugte Leuchtdichte lokal spezifisch in Abhängigkeit von der Temperaturverteilung steuerbar ist. Es können also die Dünnfilmsensoren auf der Flächenlichtquelle angebracht sein, um die Temperaturverteilung auf der Flächenlichtquelle zu erfassen, um gegebenenfalls gezielt Bereiche der Flächenlichtquelle spezifisch anzusteuern, zum Beispiel zum Abdimmen bei erhöhten Temperaturen. Durch die Steuerung der Flächenlichtquelle in Abhängigkeit von der erfassten Temperatur kann eine Überhitzung vermieden werden. Vorzugsweise wird also die Flächenlichtquelle so gesteuert, dass eine Maximaltemperatur nicht überschritten wird.

Der jeweilige Dünnfilmsensor kann auch als Dünnfilmtemperatursensor bezeichnet werden. Der Dünnfilmsensor beansprucht dabei besonders wenig Bauraum, womit auch die Beleuchtungsvorrichtung besonders klein sein kann. Außerdem kann der Dünnfilmsensor aufgrund seiner besonders flachen Bauweise sehr nah an einer besonders thermisch belasteten Stelle der Flächenlichtquelle positioniert werden. Dadurch kann die Temperatur der Flächenlichtquelle an dieser Stelle besonders gut überwacht werden. Insbesondere kann der Dünnfilmsensor so positioniert werden, dass die Temperatur der Flächenlichtquelle an der gewünschten Stelle weitestgehend direkt gemessen werden kann. Bei herkömmlichen Temperatursensoren sind diese beispielsweise durch wenigstens einen Grundkörper und/oder weitere Elemente beabstandet von der Flächenlichtquelle positioniert. Dann muss auf die tatsächliche Temperatur der Flächenlichtquelle mittels einer Wärmeübertragungsfunktion dieser Elemente zurückgerechnet werden. Eine solche Berechnung ist jedoch ungenauer als eine im Wesentlichen direkte Messung. Mittels des Dünnfilmsensors kann also die Temperatur der Flächenlichtquelle an der Stelle besonders präzise überwacht werden.

Weiterhin kann es vorgesehen sein, dass mittels der Temperatursensoreinrichtung eine jeweilige Temperatur der Flächenlichtquelle an verschiedenen Stellen der Flächenlichtquelle erfassbar ist, wobei die Flächenlichtquelle mittels der Steuereinrichtung in Abhängigkeit von den jeweiligen an den verschiedenen Stellen erfassten Temperaturen steuerbar ist. Die Temperatur wird dann also an einer Mehrzahl von Stellen gemessen. Dafür kann beispielsweise eine Mehrzahl von Dünnfilmsensoren eingesetzt werden. Insgesamt kann dann also mit der Temperatursensoreinrichtung eine Temperaturverteilung erfasst werden. Die Flächenlichtquelle kann dann in Abhängigkeit von dieser Temperaturverteilung gesteuert werden. Auch dabei kann eine Maximaltemperatur der Temperaturverteilung ermittelt werden, wobei die Flächenlichtquelle vorzugsweise so gesteuert wird, dass eine vorgegebene Maximaltemperatur nicht überschritten wird. Alternativ kann auch ein Dünnfilmsensor eingesetzt werden, welcher die Temperatur über eine Fläche erfasst. Die erfasste Temperatur über die Fläche kann dabei einer Maximaltemperatur auf der Fläche entsprechen oder auch einer gemittelten Temperatur dieser Fläche.

Somit ist es möglich, die jeweilige Temperatur der Flächenlichtquelle lokal zu erfassen. Eine Flächenlichtquelle erwärmt sich nicht immer gleichmäßig in Abhängigkeit von der vorliegenden Stromdichte bzw. der Strahlungsleistung. Vielmehr kann sich die Flächenlichtquelle in Abhängigkeit von jeweiligen Umgebungsbedingungen lokal unterschiedlich erwärmen. Auch jeweilige Kühlelemente und/oder Isolierungselemente, welche neben der Flächenlichtquelle angeordnet sind, können eine lokal unterschiedliche Temperaturverteilung der Flächenlichtquelle bewirken. Durch die lokale Messung der Temperaturen können auch solche Effekte bei der Temperaturüberwachung mit erfasst werden. Es kann also die tatsächliche lokale thermische Belastung der Flächenlichtquelle gemessen werden.

Umgekehrt kann auch ein Output des Lichtstromes und somit der Leuchtdichte an unterschiedlichen Stellen durch die lokale Temperatur der Flächenlichtquelle beeinflusst werden. Durch die Erfassung einer Temperaturverteilung kann dann die Flächenlichtquelle so gesteuert werden, dass sich eine möglichst homogene Leuchtdichteverteilung ergibt. Die Flächenlichtquelle kann hierbei auch segmentiert ausgebildet sein.

Die jeweiligen Dünnfilmsensoren der Temperatursensoreinrichtung können mit der Steuereinrichtung jeweils mittels zweier elektrischer Leiterbahnen verbunden sein. Die Dünnfilmsensoren können beispielsweise als mäanderförmig angeordnete Thermowiderstände in einer Folie ausgebildet sein.

In weiterer vorteilhafter Ausgestaltung der erfindungsgemäßen Beleuchtungsvorrichtung ist es vorgesehen, dass der Dünnfilmsensor wenigstens teilweise transparent ist und an einer Lichtaustrittsseite der Flächenlichtquelle angeordnet ist. Dafür kann der Dünnfilmsensor beispielsweise auf eine transparente Folie aufgebracht werden, wobei jeweilige elektrische Leiterbahnen des Dünnfilmsensors ebenfalls aus transparenten Materialien gebildet sein können. Geeignet ist zum Beispiel Indiumzinnoxid, ITO oder sogenannte transparent conducting oxides. Alternativ oder zusätzlich ist es möglich, jeweilige elektrische Leiterbahnen so dünn auszubilden, dass diese optisch für das menschliche Auge kaum oder gar nicht wahrnehmbar sind. Beispielsweise können jeweilige elektrische Leiterbahnen mit einer Dicke von 100 bis 1.000 Nanometern keine oder eine nur kaum wahrnehmbare lokale Minderung der Leuchtdichte verursachen. Insgesamt kann dadurch der Dünnfilmsensor auf der Lichtaustrittsseite der Flächenlichtquelle angeordnet werden, ohne dass dabei eine Beleuchtung durch die Beleuchtungsvorrichtung negativ beeinflusst wird. Durch die Anordnung des Dünnfilmsensors auf der Lichtaustrittsseite ist der Dünnfilmsensor besonders nah an denjenigen Stellen in der Flächenlichtquelle angeordnet, bei welchen Abwärme erzeugt wird. Insbesondere kann auch die Beleuchtungsvorrichtung und damit die Flächenlichtquelle durch abgestrahltes und dann teilweise wieder absorbiertes Licht erwärmt werden. Die Temperaturüberwachung der Beleuchtungsvorrichtung ist durch die Positionierung des Dünnfilmsensors an der Lichtaustrittsseite nochmals präziser.

In weiterer vorteilhafter Ausgestaltung der erfindungsgemäßen Beleuchtungsvorrichtung ist es vorgesehen, dass der Dünnfilmsensor an einer der Lichtaustrittsseite der Flächenlichtquelle abgewandten Seite der Flächenlichtquelle angeordnet ist. In diesem Fall kann auf einen transparenten Dünnfilmsensor verzichtet werden. Dadurch kann der Dünnfilmsensor besonders kostengünstig sein. Außerdem ist der Dünnfilmsensor so besonders gut vor Beschädigungen und/oder Umwelteinflüssen geschützt. Der Dünnfilmsensor kann dabei auch zwischen der Flächenlichtquelle und einem Grundkörper der Beleuchtungsvorrichtung angeordnet beziehungsweise gehalten sein.

Selbstverständlich können auch ein oder mehrere Dünnfilmsensoren an der Lichtaustrittsseite der Flächenlichtquelle angeordnet sein und ein weiterer oder weitere Dünnfilmsensoren an der der Lichtaustrittsseite abgewandten Seite der Flächenlichtquelle. Dadurch kann die Temperatur der Flächenlichtquelle beidseitig überwacht werden, wodurch eine besonders genaue Temperaturüberwachung möglich ist. An der Lichtaustrittsseite der Flächenlichtquelle kann dabei die Temperatur der Flächenlichtquelle selbst besonders genau überwacht werden, während an der der Lichtaustrittsseite abgewandten Seite der Flächenlichtquelle eine mögliche thermische Beeinträchtigung von weiteren neben der Beleuchtungsvorrichtung angeordneten Komponenten besonders genau überwacht und dadurch verhindert werden kann.

In weiterer vorteilhafter Ausgestaltung der Beleuchtungsvorrichtung ist es vorgesehen, dass die Flächenlichtquelle als OLED und/oder Elektrolumineszenzfolie ausgebildet ist. Eine OLED kann auch als organisches Leuchtdiodenelement bezeichnet werden. Die Elektrolumineszenzfolie wird auch als EL bezeichnet. Eine OLED ist besonders effizient und ermöglicht eine besonders gestalterische Freiheit bei einer Beleuchtung des Kraftfahrzeugs. Insbesondere können mittels der OLED verschiedene farbige Beleuchtungen besonders kostengünstig realisiert werden. Eine OLED kann jedoch über ihre Fläche besonders unregelmäßig Abwärme erzeugen. Das heißt, die OLED kann sich lokal stark unterschiedlich bei ihrem Betrieb erhitzen. Gleichzeitig ist eine OLED besonders anfällig für Beschädigungen aufgrund von thermischen Belastungen. Durch die Temperatursensoreinrichtung mit dem Dünnfilmsensor lässt sich die thermische Belastung der OLED besonders gut und auch lokal erfassen. Entsprechend ist eine besonders präzise Temperaturüberwachung möglich und eine Beschädigung der OLED kann besonders gut verhindert werden. Entsprechend können bei der Beleuchtungsvorrichtung OLEDs problemlos eingesetzt werden, da eine Beschädigung durch eine thermische Belastung nun nicht mehr befürchtet werden muss. Auch müssen keine großen thermischen Reserven mehr vorgesehen werden, um eine unzulässige Erhitzung der OLED zuverlässig vermeiden zu können. Die OLED kann also besonders effizient betrieben werden und/oder besonders hohe Leuchtdichten erzeugen, ohne dass dabei befürchtet werden muss, dass diese zu heiß wird und sich damit gegebenenfalls selbst zerstört. Gleiches gilt auch für die Elektrolumineszenzfolie. Außerdem ist auch die Leuchtdichteverteilung bei einer OLED stark temperaturabhängig. Mittels des Dünnfilmsensors kann die Temperatur besonders präzise erfasst werden, womit auch die Leuchtdichteverteilung besonders homogen eingestellt werden kann.

In weiterer vorteilhafter Ausgestaltung der erfindungsgemäßen Beleuchtungsvorrichtung ist es vorgesehen, dass der Dünnfilmsensor flexibel ausgebildet ist. Dadurch ist es möglich, den Dünnfilmsensor an eine Kontur der Flächenlichtquelle anzupassen. Dies ist besonders vorteilhaft, falls auch die Flächenlichtquelle flexibel ausgebildet ist. Falls die Flächenlichtquelle als sogenannte 2,5-D-Anordnung ausgebildet ist, oder sogar voll dreidimensional, ist es bei einem flexiblen Dünnfilmsensor problemlos möglich, diesen an die Kontur der Flächenlichtquelle anzupassen. Jeweilige Stellen, an welchen die Temperaturen erfasst werden können, können also weiterhin optimal ausgewählt werden, ohne dabei durch eine konstruktive Gestaltung von jeweiligen Temperatursensoren eingeschränkt zu sein.

In weiterer vorteilhafter Ausgestaltung der erfindungsgemäßen Beleuchtungsvorrichtung ist es vorgesehen, dass der Dünnfilmsensor auf die Flächenlichtquelle geklebt ist. Dadurch kann der Dünnfilmsensor besonders einfach und kostengünstig in die Beleuchtungsvorrichtung integriert werden. Außerdem kann so sichergestellt werden, dass der Dünnfilmsensor in einer definierten Position zu der Flächenlichtquelle verbleibt, auch wenn jeweilige Erschütterungen auf die Beleuchtungsvorrichtung einwirken. Auch die Montage der Beleuchtungsvorrichtung und der Flächenlichtquelle ist so besonders einfach möglich.

In weiterer vorteilhafter Ausgestaltung der erfindungsgemäßen Beleuchtungsvorrichtung ist es vorgesehen, dass der Dünnfilmsensor auf einem Folienelement angeordnet ist, welches mittels eines Interface-Materials auf der Flächenlichtquelle befestigt ist. Insbesondere kann der Dünnfilmsensor dabei auf einer der Flächenlichtquelle zugeordneten Seite des Folienelements angeordnet sein. Das Interface-Material kann beispielsweise ein Kleber sein. Das Folienelement kann mit dem darauf angeordneten Dünnfilmsensor einfach auf der Flächenlichtquelle aufgeklebt werden. Durch das Interface-Material ist der Dünnfilmsensor besonders sicher in seiner Position relativ zu der Flächenlichtquelle fixiert. Gleichzeitig sind sowohl der Dünnfilmsensor als auch die Flächenlichtquelle durch das Folienelement geschützt.

Ein zweiter Aspekt der Erfindung betrifft ein Verfahren zum Herstellen einer Beleuchtungsvorrichtung für ein Kraftfahrzeug mit einer Flächenlichtquelle, einer einen Dünnfilmsensor umfassenden Temperatursensoreinrichtung zum Erfassen einer Temperatur an einer Stelle der Flächenlichtquelle und einer Steuereinrichtung, mittels welcher die Flächenlichtquelle in Abhängigkeit von der erfassten Temperatur steuerbar ist, wobei der Dünnfilmsensor und die Flächenlichtquelle als Folien ausgebildet sind, welche in einem Rolle-zu-Rolle-Verfahren hergestellt werden. Das Verfahren gemäß dem zweiten Erfindungsaspekt betrifft also eine Herstellung der Beleuchtungsvorrichtung.

Bei dem Rolle-zu-Rolle-Verfahren wird wenigstens eine Folie zwischen beispielsweise zwei Rollen durchgeführt, wobei durch die Rolle jeweilige elektrische Elemente, insbesondere elektrische Leiterbahnen, in die Folie eingebracht werden. Der Dünnfilmsensor und die Flächenlichtquelle können dabei gemeinsam in eine Folie eingebracht werden. Eine solche Folie benötigt besonders wenig Bauraum in der Beleuchtungsvorrichtung. Alternativ kann der Dünnfilmsensor auf eine Folie aufgebracht werden und die Flächenlichtquelle auf eine andere Folie. Die beiden Folien werden aufeinander laminiert. In diesem Fall können der Dünnfilmsensor und die Flächenlichtquelle getrennt voneinander hergestellt werden. Selbstverständlich kann nicht nur ein Dünnfilmsensor auf eine Folie aufgebracht werden, sondern eine Vielzahl von Dünnfilmsensoren. Gleiches gilt für die Flächenlichtquelle. Dabei ist es auch möglich, sowohl die Flächenlichtquelle als auch den Dünnfilmsensor in einem Endlosverfahren herzustellen und jeweilige Elemente aus der Folie bedarfsgerecht auszuschneiden. Nach dem Herstellen der Folie oder der Folien können diese schichtweise auf einen Grundkörper der Beleuchtungsvorrichtung auflaminiert werden.

In einem nicht zur Erfindung gehörenden Aspekt kann ein Abscheiden des Dünnfilmsensors auf den Grundkörper beispielsweise mittels eines sogenannten ITO-Verfahrens, einer Lithographie, eines Sputterprozesses oder beispielsweise mittels eines sogenannten PVD-Metalldampfes erfolgen. Der Grundkörper kann in diesem Falle ebenfalls ein Folienelement sein. Der Dünnfilmsensor kann auch direkt auf die Flächenlichtquelle abgeschieden werden. In diesem Fall kann die Flächenlichtquelle als der Grundkörper verstanden werden. Durch das Abscheiden des Dünnfilmsensors kann dieser direkt an jeweilige geometrische Abmessungen des Grundkörpers und/oder der Flächenlichtquelle angepasst werden. Das Folienelement kann auch als Trägerfolie bezeichnet werden. Das Abscheiden auf den Grundkörper ermöglicht eine besonders kostengünstige Anpassung des Dünnfilmsensors an eine nicht ebene Oberfläche.

Erfindungsgemäß ist vorgesehen, dass der Dünnfilmsensor und die Flächenlichtquelle gemeinsam auf eine Folie im Rolle-zu-Rolle-Verfahren aufgebracht werden oder auf jeweils eine Folie aufgebracht werden, wobei diese Folien aufeinander laminiert werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: in einer schematischen Perspektivansicht eine Temperatursensoreinrichtung für eine Beleuchtungsvorrichtung eines Kraftfahrzeugs; und
- Fig. 2: in einer schematischen Schnittansicht eine Beleuchtungsvorrichtung für ein Kraftfahrzeug mit einer Flächenlichtquelle.

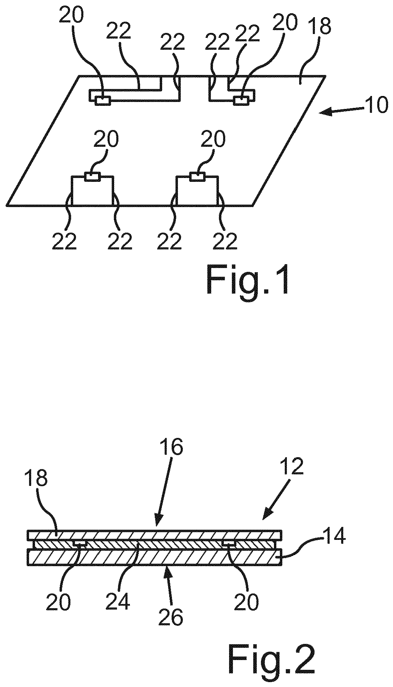

Fig. 1 zeigt in einer schematischen Perspektivansicht eine Temperatursensoreinrichtung 10 für eine Beleuchtungsvorrichtung 12 für ein Kraftfahrzeug, welche in der schematischen Schnittansicht in Fig. 2 gezeigt ist. Die Beleuchtungsvorrichtung 12 umfasst dabei eine Flächenlichtquelle 14, welche in dem gezeigten Beispiel als OLED ausgebildet ist. Mittels der Flächenlichtquelle 14 kann aus der Beleuchtungsvorrichtung 12 flächig an der Lichtaustrittsseite 16 Licht emittiert werden, womit beispielsweise ein Innenraum des Kraftfahrzeugs beleuchtet werden kann. Mittels der Temperatursensoreinrichtung 10 wird eine Temperatur an verschiedenen voneinander beabstandeten Stellen der Flächenlichtquelle 14 erfasst. In Abhängigkeit von diesen erfassten Temperaturen wird mittels einer hier nicht gezeigten Steuereinrichtung die Flächenlichtquelle 14 gesteuert. Insbesondere wird die Flächenlichtquelle 14 gedimmt, falls diese droht, eine Maximaltemperatur zu überschreiten.

Die Temperatursensoreinrichtung 10 umfasst dabei ein Folienelement 18, auf welches in einem Rolle-zu-Rolle-Verfahren mehrere Dünnfilmsensoren 20 aufgebracht worden sind. Diese Dünnfilmsensoren 20 umfassen beispielsweise sogenannte Thermowiderstände und sind mit der Steuereinrichtung mittels jeweiliger Leitungselemente 22 verbunden, welche auch als Verbindungsleitungen bezeichnet werden können. Durch die Mehrzahl von Dünnfilmsensoren 20 kann die Temperatursensoreinrichtung 10 eine jeweilige Temperatur der Flächenlichtquelle 14 an verschiedenen Stellen erfassen. Es kann also eine Temperaturverteilung auf der Flächenlichtquelle 14 erfasst werden. Dadurch können auch örtliche Wärmespitzen erfasst werden. Würde dagegen lediglich ein Temperatursensor verwendet werden, welcher zudem von der Flächenlichtquelle 14 durch andere Elemente beabstandet ist, müsste auf die höchste Erwärmung der Flächenlichtquelle 14 mittels einer nur mittelbar erfassten Temperatur zurückgeschlossen werden. Da ein solcher Rückschluss nur ungenau berechenbar ist, müssten dann große Temperaturreserven vorgesehen werden, um eine Überschreitung der Maximaltemperatur und damit Beschädigung der Flächenlichtquelle 14 zuverlässig vermeiden zu können.

Dagegen wird die Temperatursensoreinrichtung 10 auf der Flächenlichtquelle 14 so angeordnet, dass die Dünnfilmsensoren 20 im Wesentlichen direkt dort angeordnet sind, wo sich die Flächenlichtquelle 14 erwärmt. Dabei handelt es sich üblicherweise um die Lichtaustrittsseite 16 der Flächenlichtquelle 14. Die Dünnfilmsensoren 20 können dabei an lokalen Stellen, an welchen mit der höchsten Erwärmung zu rechnen ist, angeordnet werden. Alternativ können die Dünnfilmsensoren 20 so dicht flächendeckend auf dem Folienelement 18 und damit neben der Flächenlichtquelle 14 angeordnet sein, dass die Flächenlichtquelle 14 flächendeckend überwacht werden kann. Dann ist es nicht notwendig, vorher Stellen mittels einer Simulation oder experimentell zu bestimmen, an welchen die höchste Erwärmung der Flächenlichtquelle 14 auftritt.

Dadurch können die Flächenlichtquelle 14 und damit auch die Beleuchtungsvorrichtung 12 besonders gut temperaturüberwacht werden. Es müssen keine großen Reserven bei der Erhitzung vorgesehen werden, um Messungenauigkeiten tolerieren zu können. Die Temperaturerfassung ist besonders genau.

Das Folienelement 18 wird mit den darauf angebrachten Dünnfilmsensoren 20 mittels eines Interface-Materials 24 auf der Flächenlichtquelle 14 aufgeklebt. Das Folienelement 18 und auch die Dünnfilmsensoren 20 können dabei flexibel ausgebildet sein, um die Temperatursensoreinrichtung 10 an eine Kontur der Flächenlichtquelle 14 anpassen zu können. Die Flächenlichtquelle 14 kann dabei ebenfalls flexibel ausgebildet sein. Dadurch ist es möglich, eine Beleuchtungsvorrichtung 12 zu schaffen, welche eine unebene Geometrie aufweist. Dadurch kann die Beleuchtungsvorrichtung 12 beispielsweise problemlos an eine geschwungene Kontur einer Innenraumverkleidung des Kraftfahrzeugs angepasst werden.

Da die Temperatursensoreinrichtung 10 mit dem Folienelement 18 und den Dünnfilmsensoren 20 auf der Lichtaustrittsseite 16 der Flächenlichtquelle 14 angeordnet ist, sind diese wenigstens teilweise transparent ausgebildet. Das Folienelement 18 kann beispielsweise aus einer durchsichtigen Plastikfolie bestehen. Die Dünnfilmsensoren 20 und die Leitungselemente 22 sind beispielsweise als ultradünne Elemente auf Metalloxid- oder Siliziumbasis auf dem Folienelement 18 abgeschieden worden. Die jeweiligen Leitungen weisen dabei beispielsweise einen Durchmesser von 100 bis 1.000 Nanometer auf. Allein aufgrund dieser geringen Abmessungen können diese jeweiligen Elemente eine Transparenz aufweisen. Insgesamt kann die Temperatursensoreinrichtung 10 und/oder die Dünnfilmsensoren 20 eine Dicke von weniger als 100 Mikrometer aufweisen. Durch die Transparenz der Temperatursensoreinrichtung 10 wird das Abstrahlen von Licht mittels der Flächenlichtquelle 14 an der Lichtaustrittsseite 16 kaum oder gar nicht beeinflusst.

Durch die Erfassung der Temperaturverteilung auf der Flächenlichtquelle 14 kann diese auch so angesteuert werden, dass eine homogene Leuchtdichteverteilung entsteht. Alternativ kann die Flächenlichtquelle 14 auch so gesteuert werden, dass gezielt eine gewünschte inhomogene Leuchtdichteverteilung resultiert. Dabei kann die dadurch bewirkte unterschiedlich starke Erwärmung der Flächenlichtquelle 14 weiterhin erfasst werden, sodass die Flächenlichtquelle 14 nicht gefährdet ist, lokal überhitzt zu werden.

Die ultradünne Temperatursensorik der Temperatursensoreinrichtung 10 wird also flächig auf die Flächenlichtquelle 14 angebracht und ermöglicht dadurch eine Ermittlung der Temperaturverteilung auf der Bauteiloberfläche der Flächenlichtquelle 14. Dies erlaubt eine deutlich präzisere und ortsbezogene Auflösung der Temperaturen auf dem Bauteil im Vergleich zu konventionellen Lösungen, welche beispielsweise nur einen Temperatursensor umfassen, der üblicherweise auf einer der Lichtaustrittsseite 16 abgewandten Seite 26 der Flächenlichtquelle 14 oder an deren Rand angebracht ist.

Durch die flexible und/oder transparente Gestaltung der Dünnfilmsensoren 20 können diese direkt auf die Lichtaustrittsseite 16 der Flächenlichtquelle 14 geklebt oder auflaminiert werden. Dabei kann die Herstellung der Temperatursensoreinrichtung 10 direkt in einen Herstellungsprozess der Flächenlichtquelle 14 mit eingebunden werden. Dabei können die Flächenlichtquelle 14 und die Dünnfilmsensoren 20 gemeinsam in einem Rolle-zu-Rolle-Verfahren auf eine Folie aufgebracht werden.

Die flexible Flächenlichtquelle 14 kann weiterhin flexibel beziehungsweise dreidimensional verformt werden, da die ultradünne und ebenfalls flexible Temperatursensoreinrichtung 10 keinen Einfluss auf die Verformbarkeit der Flächenlichtquelle 14 hat.

Da die Abstrahlcharakteristik und Leuchtdichteverteilung von der Temperatur der Flächenlichtquelle 14 abhängig ist, ist eine Bestimmung dieser Temperatur zur gezielten Beeinflussung der Lichtverteilung notwendig. Durch die hier gezeigte Temperatursensoreinrichtung 10 wird die jeweilige Sensorik flächig auf die Flächenlichtquelle 14 angebracht und ermöglicht dadurch eine Ermittlung der Temperaturverteilung auf einer Bauteiloberfläche der Flächenlichtquelle 14.

Speziell bei temperatursensitiven Bauteilen, zum Beispiel organischer Elektronik, im Speziellen OLEDs, ist die genaue Ortsauflösung der Temperatur notwendig, um eine präzise Temperaturregelung beziehungsweise einen effektiven Temperaturschutz zu implementieren. Bei einer drohenden Überschreitung einer kritischen Höchsttemperatur kann die Flächenlichtquelle 14 gezielt gedimmt werden. Diese Dimmung kann auch nur für bestimmte Teilbereiche der Flächenlichtquelle 14 vorgenommen werden. Gerade im Hinblick auf segmentierte Flächenlichtquellen können also einzelne Flächen gezielt in Abhängigkeit von der Temperatur gesteuert werden.

Die flächenhafte Temperatursensoreinrichtung 10 kann als Foliensystem mit einzelnen diskreten Temperatursensoren verstanden werden, nämlich den Dünnfilmsensoren 20. Hierbei dient das Folienelement 18 als Trägersubstrat, und die einzelnen Sensorzellen in Form der Dünnfilmsensoren 20 können mittels verschiedener Herstellungsverfahren auf dieses Trägersubstrat appliziert werden.

Beispielsweise lassen sich die Dünnfilmsensoren 20 auf Metalloxid- oder Siliziumbasis als ultradünne Elemente abscheiden, die durch ihre geringen Abmessungen eine hohe Transparenz aufweisen. Die elektrische Kontaktierung mittels der Leitungselemente 22 kann beispielsweise ebenso über transparente Materialien erfolgen. Dafür können beispielsweise transparent conducting oxides oder Indiumzinnoxid (ITO) verwendet werden.

In einem weiteren Schritt kann die als Foliensystem ausgebildete Temperatursensoreinrichtung 10 mit verteilten, transparenten Sensorteilen in Form der Dünnfilmsensoren 20 auf die Lichtaustrittsseite 16 der Flächenlichtquelle 14 aufgebracht werden. In einer anderen Variante kann das Foliensystem auf die Bauteilrückseite der Flächenlichtquelle 14 aufgebracht werden, also auf die der Lichtaustrittsseite 16 abgewandte Seite 26.

Durch die mögliche hohe Transparenz von den Dünnfilmsensoren 20, den Leitungselementen 22 und dem Folienelement 18 kann die Temperatursensoreinrichtung 10 auch direkt auf die Vorderseite, das heißt die Lichtaustrittsseite 16 der Flächenlichtquelle 14, appliziert werden. Dies ist in Fig. 2 gezeigt. Dadurch kann die Rückseite beziehungsweise die der Lichtaustrittsseite 16 abgewandte Seite 26 der Flächenlichtquelle 14 freigehalten werden, wodurch diese problemlos für eine mechanische Befestigung der Beleuchtungsvorrichtung 12 genutzt werden kann. Gleichzeitig kann so auch eine Erwärmung der Flächenlichtquelle 14 durch von dieser ausgehenden Strahlungsleistung mit überwacht werden.

Für die Anwendung des Folienelements 18 beziehungsweise der Temperatursensoreinrichtung 10 an die Flächenlichtquelle 14 können Laminationsverfahren und/oder Klebeverfahren genutzt werden, um hierbei im Produktionsprozess der Flächenlichtquelle 14 die Temperatursensoreinrichtung 10 in die Beleuchtungsvorrichtung 12 mit zu integrieren. Dabei kann die Beleuchtungsvorrichtung 12 direkt in der Rolle-zu-Rolle-Fertigung von der Flächenlichtquelle 14 mit der Temperatursensoreinrichtung 10 gemeinsam hergestellt und auflaminiert werden.

Die Beleuchtungsvorrichtung 12 ermöglicht es also, Flächenlichtquellen 14 mit einer hohen Temperaturempfindlichkeit und einer inhomogenen Temperaturverteilung in ungleichmäßig geometrisch geformten Bauteilen einzusetzen, ohne dass dabei Probleme bei einer Temperaturüberwachung entstehen. Die Temperatursensoreinrichtung 10 hat dabei keinen Einfluss auf eine gewünschte optische Erscheinung der Beleuchtungsvorrichtung 12.

## Patentansprüche

1. Beleuchtungsvorrichtung (12) für ein Kraftfahrzeug mit einer Flächenlichtquelle,
**dadurch gekennzeichnet, dass**
die Beleuchtungsvorrichtung (12) eine Temperatursensoreinrichtung (10) mit einer Vielzahl von Dünnfilmsensoren (20) zum Erfassen einer Temperaturverteilung der Flächenlichtquelle (14) und eine Steuereinrichtung umfasst, mittels welcher eine mittels der Flächenlichtquelle (14) erzeugte Leuchtdichte lokal spezifisch in Abhängigkeit von der Temperaturverteilung steuerbar ist.

2. Beleuchtungsvorrichtung (12) nach Anspruch 1 ,
**dadurch gekennzeichnet, dass**
der Dünnfilmsensor (20) wenigstens teilweise transparent ist und an einer Lichtaustrittsseite (16) der Flächenlichtquelle (14) angeordnet.

3. Beleuchtungsvorrichtung (12) nach Anspruch 2,
**dadurch gekennzeichnet, dass**
der Dünnfilmsensor (20) an einer der Lichtaustrittsseite (16) der Flächenlichtquelle (14) abgewandten Seite der Flächenlichtquelle (14) angeordnet ist.

4. Beleuchtungsvorrichtung (12) nach einem der vorhergehenden Ansprüche,
**dadurch gekennzeichnet, dass**
die Flächenlichtquelle (14) als OLED und/oder Elektrolumineszenz-Folie ausgebildet ist.

5. Beleuchtungsvorrichtung (12) nach einem der vorhergehenden Ansprüche,
**dadurch gekennzeichnet, dass**
der Dünnfilmsensor (20) flexibel ausgebildet ist.

6. Beleuchtungsvorrichtung (12) nach einem der vorhergehenden Ansprüche,
**dadurch gekennzeichnet, dass**
der Dünnfilmsensor (20) auf die Flächenlichtquelle (14) geklebt ist.

7. Beleuchtungsvorrichtung (12) nach einem der vorhergehenden Ansprüche,
**dadurch gekennzeichnet, dass**
der Dünnfilmsensor (20) auf einem Folienelement (18) angeordnet ist, welches mittels eines Interface-Materials auf der Flächenlichtquelle (14) befestigt ist.

8. Verfahren zum Herstellen einer Beleuchtungsvorrichtung (12) für ein Kraftfahrzeug mit einer Flächenlichtquelle (14), eine einen Dünnfilmsensor (20) umfassende Temperatursensoreinrichtung (10) zum Erfassen einer Temperatur an einer Stelle der Flächenlichtquelle (14) und einer Steuereinrichtung, mittels welcher die Flächenlichtquelle (14) in Abhängigkeit von der erfassten Temperatur steuerbar ist, wobei der Dünnfilmsensor (20) und die Flächenlichtquelle (14) als Folien ausgebildet sind, welche in einem Rolle-zu-Rolle Verfahren hergestellt werden, **dadurch gekennzeichnet, dass**
der Dünnfilmsensor (20) und die Flächenlichtquelle (14) gemeinsam auf eine Folie im Rolle-zu-Rolle Verfahren aufgebracht werden
oder auf jeweils eine Folie aufgebracht werden, wobei diese Folien aufeinander laminiert werden.

## Claims

1. Lighting device (12) for a motor vehicle having a surface light source, **characterised in that** the lighting device (12) comprises a temperature sensor device (10) with a plurality of thin film sensors (20) for detecting a temperature distribution of the surface light source (14) and a control device, by means of which a luminance generated by means of the surface light source (14) is controllable locally specifically as a function of the temperature distribution.

2. Lighting device (12) according to claim 1,
**characterised in that**
the thin film sensor (20) is at least partially transparent and arranged on a light exit side (16) of the surface light source (14).

3. Lighting device (12) according to claim 2,
**characterised in that**
the thin film sensor (20) is arranged on a side of the surface light source (14) facing away from the light exit side (16) of the surface light source (14).

4. Lighting device (12) according to any one of the preceding claims,
**characterised in that**
the surface light source (14) is designed as an OLED and/or electroluminescent film.

5. Lighting device (12) according to any one of the preceding claims,
**characterised in that**
the thin film sensor (20) is designed to be flexible.

6. Lighting device (12) according to any one of the preceding claims,
**characterised in that**
the thin film sensor (20) is adhered to the surface light source (14).

7. Lighting device (12) according to any one of the preceding claims,
**characterised in that**
the thin film sensor (20) is arranged on a film element (18) which is fastened on the surface light source (14) by means of an interface material.

8. Method for producing an lighting device (12) for a motor vehicle having a surface light source (14), a temperature sensor device (10) comprising a thin film sensor (20) for detecting a temperature at a location of the surface light source (14), and a control device by means of which the surface light source (14) is controllable as a function of the detected temperature, wherein the thin film sensor (20) and the surface light source (14) are formed as films which are produced in a roll-to-roll process, **characterised in that** the thin film sensor (20) and the surface light source (14) are applied together to a film in a roll-to-roll process or applied respectively to a film, wherein these films are laminated together.

## Revendications

1. Dispositif d'éclairage (12) pour un véhicule automobile avec une source de lumière de surface,
**caractérisé en ce que**
le dispositif d'éclairage (12) comprend un dispositif de capteur de température (10) avec une pluralité de capteurs de film mince (20) pour la détection d'une répartition de température de la source de lumière de surface (14) et un dispositif de commande, au moyen duquel une intensité lumineuse générée au moyen de la source de lumière de surface (14) peut être commandée localement spécifiquement en fonction de la répartition de température.

2. Dispositif d'éclairage (12) selon la revendication 1,
**caractérisé en ce que**
le capteur de film mince (20) est transparent au moins partiellement et agencé au niveau d'un côté de sortie de lumière (16) de la source de lumière de surface (14).

3. Dispositif d'éclairage (12) selon la revendication 2,
**caractérisé en ce que**
le capteur de film mince (20) est agencé au niveau d'un côté éloigné du côté de sortie de lumière (16) de la source de lumière de surface (14) de la source de lumière de surface (14).

4. Dispositif d'éclairage (12) selon l'une quelconque des revendications précédentes,
**caractérisé en ce que**
la source de lumière de surface (14) est réalisée comme OLED et/ou film à électroluminescence.

5. Dispositif d'éclairage (12) selon l'une quelconque des revendications précédentes,
**caractérisé en ce que**
le capteur de film mince (20) est réalisé de manière flexible.

6. Dispositif d'éclairage (12) selon l'une quelconque des revendications précédentes,
**caractérisé en ce que**
le capteur de film mince (20) est collé sur la source de lumière de surface (14).

7. Dispositif d'éclairage (12) selon l'une quelconque des revendications précédentes,
**caractérisé en ce que**
le capteur de film mince (20) est agencé sur un élément de feuille (18) qui est fixé au moyen d'un matériau d'interface sur la source de lumière de surface (14).

8. Procédé de fabrication d'un dispositif d'éclairage (12) pour un véhicule automobile avec une source de lumière de surface (14), un dispositif de capteur de température (10) comprenant un capteur de film mince (20) pour la détection d'une température au niveau d'un endroit de la source de lumière de surface (14) et un dispositif de commande, au moyen duquel la source de lumière de surface (14) peut être commandée en fonction de la température détectée, dans lequel le capteur de film mince (20) et la source de lumière de surface (14) sont réalisés comme feuilles qui sont fabriquées dans un procédé de rouleau à rouleau,
**caractérisé en ce que**
le capteur de film mince (20) et la source de lumière de surface (14) sont appliqués ensemble sur une feuille dans le procédé de rouleau à rouleau ou sont appliqués sur respectivement une feuille, dans lequel ces feuilles sont laminées les unes sur les autres.
